# EUROPÄISCHE PATENTANMELDUNG

(11) **EP 1 033 273 A2**
(43) Veröffentlichungstag der Anmeldung: **06.09.2000**
(21) Anmeldenummer: 00103614.4
(22) Anmeldetag: 21.02.2000
(51) Int. Cl.: B60J 10/10, B60J 1/18

(54) **Klappverdeck für Kraftfahrzeuge mit einem äusseren Verdeckbezug und mindestens einer in diesem angeordneten Scheibe**

(30) Priorität: 03.03.1999 DE 19909139; 21.05.1999 DE 19923544
(71) Anmelder: PARAT Automotive, Schönenbach GmbH + Co. KG, 42897 Remscheid (DE)
(72) Erfinder: Schönenbach, Heinz, 42897 Remscheid (DE); Windpassinger, Martin, 94051 Hauzenberg (DE); Krieg, Heinrich, 94089 Neureichenau (DE)
(74) Vertreter: Patentanwälte Ostriga & Sonnet

(57) **Zusammenfassung**

Dargestellt und beschrieben ist ein Klappverdeck für Kraftfahrzeuge wie Kabrioletts od.dgl., mit einem äußeren Verdeckbezug (13) und mindestens einer in einem Ausschnitt desselben angeordneten Scheibe (10), die mit dem äußeren Verdeckstoff (13) mittels wenigstens eines Gießharz-Wulstelements (12; 15) mechanisch fest und dicht verbunden ist, wobei der Rand (14) des Ausschnitts im äußeren Verdeckbezug (13) und der Rand (11) der Scheibe (10) von Wulstelementabschnitten eingefaßt sind. Erfindungsgemäß sind der Ausschnittsrand (14) des äußeren Verdeckbezugs (13) einerseits und der Rand (11) der Scheibe (10) andererseits von jeweils einem eigenen, einen Rahmen bildenden Wulstelement (12, 15) eingefaßt. Die beiden Wulstelemente (12, 15) sind mit Fügeflächen (24, 25) versehen, über die sie paßgenau miteinander kuppelbar sind, und die beiden Wulstelemente (12, 15) sind mittels lösbarer Verbindungsmittel (16) zusammengehalten. Hiermit wird eine überaus einfache, optisch in hohem Maße ansprechende wie auch dichte Anordnung einer leicht auswechselbaren insbesondere Hartglas-Scheibe (10) in einem Stoffverdeck erzielt.

Eine ästhetisch besonders ansprechende Weiterbildung sieht vor, dass die Wulstelemente (12, 15) auf den zum Fahrzeuginnern weisenden Seiten des äußeren Verdeckbezugs (13) bzw. der Scheibe (10) so angeordnet sind, dass sie von Randpartien des äußeren Verdeckbezugs (13) und/oder der Scheibe (10) abgedeckt sind. Dadurch wird ein scharf abgegrenzter Übergang zwischen Verdeckstoff (12) und Scheibe (10) geschaffen, so dass der Eindruck entsteht, die Scheibe (10) sei unmittelbar in den Verdeckbezugausschnitt (14) eingepaßt.

## Beschreibung

Die Erfindung betrifft ein Klappverdeck für Kraftfahrzeuge wie Kabrioletts od.dgl., mit einem äußeren Verdeckbezug und mindestens einer in einem Ausschnitt desselben angeordneten Scheibe, die mit dem äußeren Verdeckstoff mittels wenigstens eines Gießharz-Wulstelements mechanisch fest und dicht verbunden ist, wobei der Rand des Ausschnitts im äußeren Verdeckbezug und der Rand der Scheibe von Wulstelementabschnitten eingefaßt sind.

Die Erfindung geht aus von der DE 197 24 592 C1. Dieses Dokument offenbart ein Fahrzeugverdeck, bei dem die Verdeck- bzw. Heckscheibe mit einem Verdeckflächenelement mittels eines PUR-Gießharz-Wulstelementes mechanisch fest und dicht verbunden ist, welches den Rand des Verdeckflächenelementes und den dazu benachbarten Rand der Verdeck- bzw. Heckscheibe beidseitig, d.h. innen- und außenseitig mechanisch fest und dicht einfaßt. Zur Realisierung eines solchen Verdecks werden die beiden Verdeckflächenelemente passend in ein geeignet ausgebildetes Werkzeug eingebracht, das Werkzeug dicht verschlossen und in den im Werkzeug vorhandenen Formhohlraum das PUR-Gießharz eingebracht. Nach dem Reaktionsablauf des PUR-Gießharzes wird die Form geöffnet und das entsprechende Verdeck bzw. Verdeckteil aus dem Formwerkzeug entnommen.

Der wesentliche Vorteil einer derartigen Verdeckausgestaltung ist es, dass die beiden Verdeckflächenelemente ohne aufwendige konstruktive Maßnahmen, wie insbesondere Kleben oder Nähen, miteinander verbindbar sind, und zwar auch in einer optisch sehr ansprechenden Art und Weise. Die Einbindung einer Scheibe in den Ausschnitt eines Verdeckstoffes mittels eines PUR-Gießharz-Wulstelementes ist auch insbesondere für Hartglasscheiben von besonderem Vorteil, die grundsätzlich nicht wie flexible Kunststoffscheiben in den Verdeckstoff eingenäht werden können.

Diese bekannte Verdeckkonstruktion weist jedoch insbesondere noch den Mangel auf, dass ein einfaches Auswechseln der Scheibe im Verdeck nicht möglich ist.

Fahrzeug-Klappverdecke mit auswechselbaren Scheiben sind andererseits in vielfachen Varianten bekannt. Insbesondere sind Lösungen bekannt, bei denen als Verbindungsmittel ein umlaufender Reißverschluß verwendet wird. Hier bestehen insbesondere Dichtigkeitsprobleme, es sei denn, man wendet aufwendige besondere Dichtungsmaßnahmen an. Weiterhin bekannt sind komplexe und komplizierte Schraubverbindungen. Auch diese sind neben ihrer Vielteiligkeit wegen der aufwendigen Dichtungsarbeiten von Nachteil.

Hiervon ausgehend liegt der Erfindung die Aufgabe zugrunde, ein Klappverdeck für Fahrzeuge zu schaffen, welches die Vorteile der Gießharz-Wulstelement-Verbindung zwischen Verdeckstoff und Scheibe aufgreift, jedoch eine einfache Möglichkeit zum jederzeitigen Austausch der Scheibe schafft.

Die Erfindung löst diese Aufgabe mit den Merkmalen des unabhängigen Anspruchs und ist dementsprechend dadurch gekennzeichnet, dass der Ausschnittsrand des äußeren Verdeckbezugs einerseits und der Rand der Scheibe andererseits von jeweils einem eigenen, einen Rahmen bildenden Wulstelement eingefaßt sind, dass die beiden Wulstelemente mit Fügeflächen versehen sind, über die sie paßgenau miteinander kuppelbar sind, und dass die beiden Wulstelemente mittels lösbarer Verbindungsmittel zusammengehalten sind.

Der wesentliche Kern der erfindungsgemäßen Lösung besteht demnach darin, dass man den Ausschnittsrand des äußeren Verdeckbezugs mit einem ersten Wulstelement-Rahmen versieht und dass man den Rand der Scheibe mit einem eigenen, zweiten Wulstelement-Rahmen ausstattet, wobei diese beiden Rahmen mittels Fügeflächen so gestaltet sind, dass man sie paßgenau miteinander verbinden kann, wobei Verbindungsmittel, im einfachsten Fall Schrauben, die beiden Wulstelement-Rahmen zusammenhalten.

Da die beiden Rahmen von insbesondere aus PUR gegossenen Gießharz-Elementen ausgebildet sind, läßt sich die Fügung der beiden Rahmenteile bzw. Wulstelemente so geschickt gestalten, dass auf jegliche zusätzliche Abdichtung bzw. Dichtorgane völlig verzichtet werden kann. Dank der lösbaren Verbindungsmittel ist es möglich, die Scheibe jederzeit auswechseln zu können, da das Lösen der Verbindungsmittel eine Trennung der beiden Wulstelemente-Rahmenkörper ohne weiteres zur Folge hat.

Die Erfindung besitzt darüber hinaus den weiteren Vorteil, dass die beiden Verdeckflächenelemente - Glasscheibe und Verdeckstoff - nicht gemeinsam und exakt zueinander ausgerichtet in eine Gießform eingebracht werden müssen, sondern dass jedes dieser beiden Teile einzeln, d.h. also der innen umlaufende Rand eines Ausschnitts im Verdeckstoff einerseits und der Außenrand der Glasscheibe andererseits, in einer entsprechenden Form mit dem jeweils zugehörigen Wulstelement-Rahmen versehen werden können.

Vorteilhaft ist es, wenn die Verbindungsmittel, wie Schrauben, von der Innenseite des Verdecks her betätigbar sind, das innere Wulstelement durchgreifen und im äußeren Wulstelement verankerbar sind. Dabei ist vorteilhafterweise das innere Wulstelement der Scheibe und das äußere Wulstelement dem äußeren Verdeckbezug zugeordnet. Hierdurch werden die Werkzeugangriffsflächen der Verbindungsmittel geschützt und von außen nicht zugänglich im Innern des Fahrzeugs angeordnet. Die Verbindung selbst ist einfachster Natur.

In das äußere Wulstelement können Gewindebuchsen zur Aufnahme von Gewindeschäften der Verbindungsmittel mit eingegossen sein. Dies ist eine Lösung, die sich insbesondere dann empfiehlt, wenn man nicht - wie einem weiteren Vorschlag der Erfindung folgend - die Schrauben selbstschneidend ausgebildet und mit ihren Gewindeschäften jeweils in eine Aufnahmeöffnung des äußeren Wulstelements eingreifen läßt.

Zur Formstabilisierung der Wulstelemente einerseits wie auch zur Abstützung und Aufnahme der von den Verbindungsmitteln wie Schrauben ausgeübten Spannkräfte ist es des weiteren vorteilhaft, wenn zumindest eines der Wulstelemente mit stabilisierenden Bewehrungselementen versehen ist, die aus Metallstreifen bestehen können, welche in das betreffende Wulstelement mit eingegossen sind. Die Bewehrungselemente können zumindest teilweise einer ggf. winkligen Querschnittskontur des betreffenden Wulstelements folgen und bilden insoweit einen Versteifungskern aus.

Ferner können die Bewehrungseinlagen an der Verschraubung insoweit teilnehmen, als sie Öffnungen aufweisen, mit denen die Schraub-Verbindungsmittel gewindemäßig zusammenwirken. Auf diese Weise kann vermieden werden, dass scharfe Gewindeflanken eventuell das Material der Wulstelemente beschädigen könnten, wenn sie direkt und nur mit diesen zusammenwirken würden. Es hat sich allerdings auch gezeigt, dass bei entsprechend optimierter Einstellung des Kunststoffes für die Wulstelemente tatsächlich auch ein unmittelbares Eingreifen einer insbesondere selbstschneidenden Schraube unproblematisch ist. Gleichwohl ist eine zusätzliche Sicherheit geschaffen, wenn die Bewehrungseinlagen auch bei der Schraubenverankerung mitwirken.

Was die eingangs erwähnte Fügung der beiden rahmenartigen Wulstelemente betrifft, ist es im Rahmen der Erfindung von Vorteil, wenn eines der Wulstelemente ein im Querschnitt im wesentlichen U-förmiges Rinnenprofil ausgebildet und das andere Wulstelement einen im wesentlichen T-förmigen Querschnitt aufweist, mit einem leistenförmigen Vorsprung, so dass die beiden Wulstelemente nach Art einer Nut-Feder-Verbindung ineinandergreifen. Dabei liegen die Wulstelemente mit ihren Fügeflächen unter Bildung einer Art Labyrinthdichtung luft- und feuchtigkeitsdicht aneinander.

Eine weitere ästhetische Verbesserung des Gegenstandes des unabhängigen Anspruchs ergibt sich entsprechend der Erfindung dadurch, dass die Wulstelemente auf den zum Fahrzeuginnern weisenden Seiten des äußeren Verdeckbezugs bzw. der Scheibe derart angeordnet sind, dass sie von Randpartien des äußeren Verdeckbezugs und/oder der Scheibe abgedeckt sind.

Der grundlegende Gedanke dieser Weiterbildung besteht folglich darin, die rahmenartigen PUR-Wulstelemente der Sicht zu entziehen. Das dadurch erzielte optische Erscheinungsbild ist geprägt durch einen scharf abgegrenzten Übergang zwischen Verdeckstoff und Scheibe, so dass der hervorragende Eindruck geschaffen wird, die Scheibe sei unmittelbar in den Verdeckbezugausschnitt eingepaßt.

Mit den Merkmalen der Erfindung wird zugleich das Material der Wulstelemente der direkten UV-Einstrahlung entzogen. Auch wenn sich ein Wulstelement direkt hinter dem Glas der Scheibe befindet, sei bemerkt, dass zur Haftung des Wulstelement-Materials am Scheibenglas ein Primer verwendet wird, wie er allgemein bei eingeklebten Scheiben zur Anwendung kommt. Ein solcher Primer hat bekanntermaßen UV-blockierende Eigenschaften zum Schutz des Klebstoffs.

Weitere Vorteile der Erfindung sowie zweckmäßige Weiterbildungen ihres Gegenstandes ergeben sich aus den bislang nicht zitierten Unteransprüchen sowie aus der nachfolgenden Beschreibung der Erfindung anhand von in den Zeichnungen dargestellter Ausführungsbeispiele. In den Zeichnungen zeigen:
- Fig. 1: eine Innenansicht auf einen Heckscheibenbereich eines Fahrzeugverdecks,
- Fig. 2: die wesentlichen Teile eines Verdecks im Verbindungsbereich zwischen dem Verdeckstoff und einer Scheibe, im Querschnitt betrachtet,
- Fig. 3: die Anordnung nach Fig. 2 im montierten Zustand,
- Fig. 4: eine der Fig. 2 entsprechende Darstellung einer zweiten Ausführungsform und
- Fig. 5: diese Ausführungsform im montierten Zustand.
- Fig. 6: eine dritte Ausführungsform in der Darstellung entsprechend Fig. 2,
- Fig. 7: die Anordnung nach Fig. 6 im montierten Zustand,
- Fig. 8: eine wiederum der Fig. 2 entsprechende Darstellung einer vierten Ausführungsform und
- Fig. 9: diese Ausführungsform im montierten Zustand.

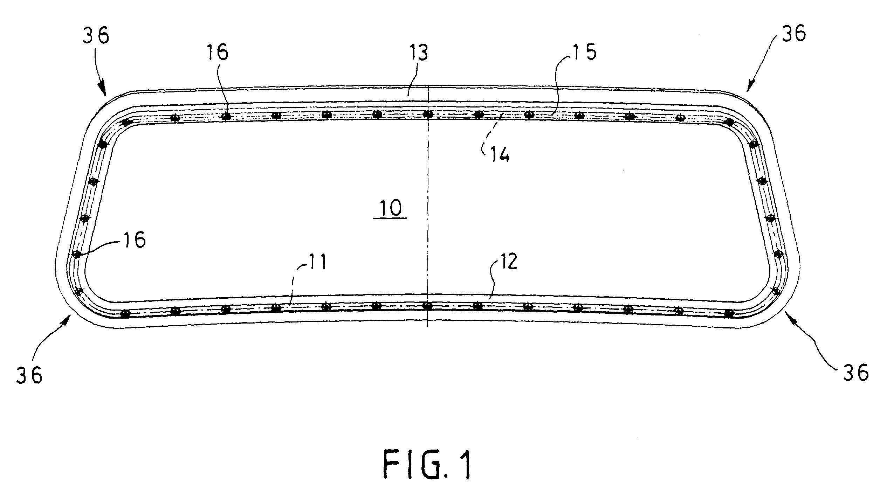

Fig. 1 zeigt, mit Blickrichtung aus dem Fahrzeuginnenraum, eine Scheibe 10, insbesondere die Heckscheibe eines Kabrioletts. Der Scheibenrand 11 ist ringsum von einem PUR-Gießharz-Wulstelement 12 eingefaßt, welches weiter unten im einzelnen beschrieben ist. Vom äußeren Verdeckbezug 13 ist nur ein umlaufender schmaler Streifen dargestellt. Der Rand 14 des im Verdeckbezug 13 angebrachten Ausschnitts ist ebenfalls von einem PUR-Gießharz-Wulstelement 15 eingefaßt.

Die beiden Gießharz-Wulstelemente 12 und 15 bilden jeweils einen Rahmen von hoher Eigensteifigkeit aus und sind in zumindest weitgehender Überdeckung bezüglich der Blickrichtung in Fig. 1 so ausgestaltet, dass sie paßgenau ineinander fügbar sind, wobei Verbindungsmittel 16, insbesondere Schrauben bzw. Verschraubungen, die beiden Wulstetemente 12 und 15 fest miteinander verbinden.

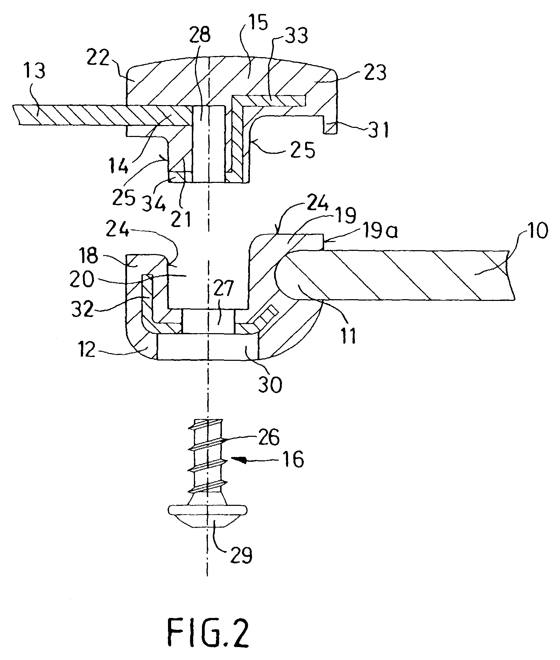

Fig. 2 zeigt die wesentlichen Elemente des Verbindungsbereichs zwischen Scheibe 11 und äußerem Verdeckbezug 13 in seinen Einzelteilen. Deutlich ist zu sehen, wie das Wulstelement 12 an den äußeren umlaufenden Rand 11 der Scheibe 10 angebunden ist und wie das zweite Wulstelement 15 mit dem Ausschnittsrand 14 des äußeren Verdeckbezugs 13 verbunden ist.

Das Wulstelement 12 besitzt eine im Querschnitt etwa U-förmige Gestalt mit einem Zentralsteg 17 und zwei U-Schenkeln 18 und 19. Zwischen diesen Schenkeln 18 und 19 ist eine im wesentlichen rechteckige Nut 20 ausgebildet.

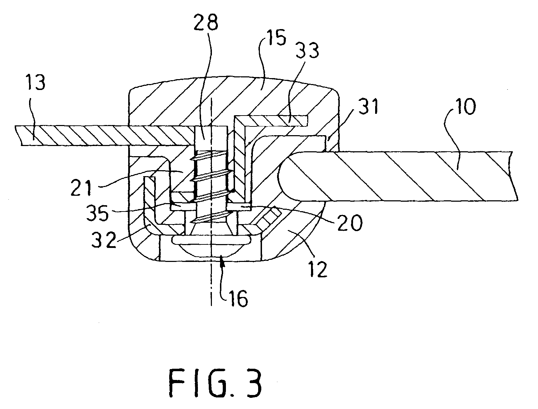

Daran angepaßt weist das dem äußeren Verdeckbezug 13 zugeordnete Wulstelement 15 im Querschnitt eine im wesentlichen T-Form auf mit einem leistenförmigen Vorsprung 21 und zwei T-Schenkeln 22 und 23. Die aufeinander zu gerichteten Konturen der beiden Wulstelemente 12 und 15 weisen einen aneinander passenden, komplementären Verlauf auf, so dass die in ihrer Gesamtheit jeweils mit 24 und 25 bezeichneten Fügeflächen paßgenau ineinander finden, wenn die beiden Wulstelement 12 und 15 zusammengesetzt werden. Wie man weiter erkennen kann, sind die Fügeflächen aufgrund ihres jeweiligen Verlaufs auch dazu geeignet und bestimmt, eine Art Labyrinthdichtung auszubilden, sobald die beiden Wulstelemente 12 und 15 fest mit einem insbesondere als Schraube ausgebildeten Verbindungsmittel 16 zusammengehalten werden, wie dies Fig. 3 zeigt.

Bei dem in den Fig. 2 und 3 dargestellten Ausführungsbeispiel werden als Verbindungsmittel selbstschneidende Schrauben 16 verwendet, deren Schraubenschäfte 26 jeweils eine Bohrung 27 in dem der Scheibe 10 zugeordneten inneren Wulstelement 12 durchgreifen und in eine Schraubenschaft-Aufnahme 28 eingreifen, die in dem zweiten, äußeren Wulstelement 15 angebracht ist. Die Schraubenköpfe 29 liegen im Montagezustand versenkt in einer Einsenkung 30 auf der ins Fahrzeuginnere weisenden Oberseite des Wulstelements 12. Gegebenenfalls kann der sichtbare Teil des Schraubenkopfes 19 auch noch mittels einer farblich an das Wulstelement 12 angepaßten Kappe verdeckt sein - was jedoch nicht dargestellt ist - so dass die Verbindungsmittel selbst unsichtbar sind.

Wie ersichtlich, ist die Schraubenaufnahme 28 im Wulstelement 14 als Sackbohrung ausgebildet, so dass diese zur Außenseite des Verdecks hin völlig vom Werkstoff des Wulstelementes 15 überdeckt ist.

Fig. 2 zeigt ferner, dass das Wulstelement 15 noch mit einer Randleiste 31 versehen ist, die sich im zusammengebauten Zustand gemäß Fig. 3 um eine Außenkante 32 des anderen Wulstelementes 12 schmiegt und auf der Außenfläche der Scheibe 10 aufsitzt. Die Randleiste 31 dient einerseits der zusätzlichen Abdichtung des Fügeflächenbereichs, nimmt also an der Labyrinthdichtung im Sinne eines Schmutzabweisers teil, und sorgt andererseits für einen sehr exakten und trennscharfen umlaufenden Rand als von außen sichtbare Scheibeneinfassung.

Die beiden Wulstelemente 12 und 15 sind im übrigen noch mit Bewehrungseinlagen 32 und 33 versehen. Hierbei handelt es sich um Metallstreifen, die während des Gießvorgangs in das PUR-Material des jeweiligen Wulstelementes 12 bzw. 15 mit eingebracht würden.

Entsprechend der grundsätzlichen Querschnittsform des U-förmigen Wulstelementes 12 ist auch dieser "Versteifungskern" 32 im wesentlichen U-förmig ausgebildet. Die Bewehrungseinlage 33 folgt teilweise dem Querschnittsverlauf des T-förmigen Wulstelementes 23, indem es beim Ausführungsbeispiel Z-förmig ausgebildet ist.

Beide Bewehrungseinlagen 32 und 33 sind so ausgestaltet, dass sie auch einen Beitrag bezüglich der Befestigung der beiden Elemente leisten.

Wie insbesondere Fig. 2 und Fig. 3 zeigen, dient die ins Fahrzeuginnere weisende Außenfläche der Bewehrungseinlage 32 im Wulstelement 12 der unmittelbaren Abstützung der Unterfläche des Schraubenkopfes 29, so dass das Kunststoffmaterial des Wulstelementes nicht beschädigt werden kann.

Der mit 34 bezeichnete Schenkel der Bewehrungseinlage 33 im Wulstelement 15 ist an der Stirnseite des leistenförmigen Vorsprungs 21 vorgesehen und weist hier eine Öffnung mit einem Innendurchmesser auf, der etwa dem Innendurchmesser der Verbindungsmittelaufnahme 28 entspricht. Die selbstschneidende Schraube 16 dringt mit ihren Gewindespitzen 26 also auch selbstschneidend in dieses metallische Bewehrungselement ein, so dass der Schraubenhalt dadurch insgesamt verbessert wird. Dies veranschaulicht Fig. 3 recht gut. Diese Darstellung zeigt im übrigen noch, dass der leistenförmige Vorsprung 21 kürzer ist als die Tiefe der Nut 20, so dass im Spannbereich ein toleranzausgleichender Spalt 35 vorhanden sein kann.

Bei den Bewehrungselementen 32 und 33 handelt es sich um sich längs den Wulstelementen 12 bzw. 15 erstreckende Leisten. Diese folgen dem gewölbten und gegebenenfalls gebogenen Verlauf des Scheiben- und des Verdeckausschnittsrandes. Lediglich in den in Fig. 1 mit 36 bezeichneten Radien sind diese Bewehrungselemente unterbrochen, d.h., es sind vier einzelne Bewehrungselementabschnitte in den jeweiligen Wulstelementen 12 und 15 angeordnet.

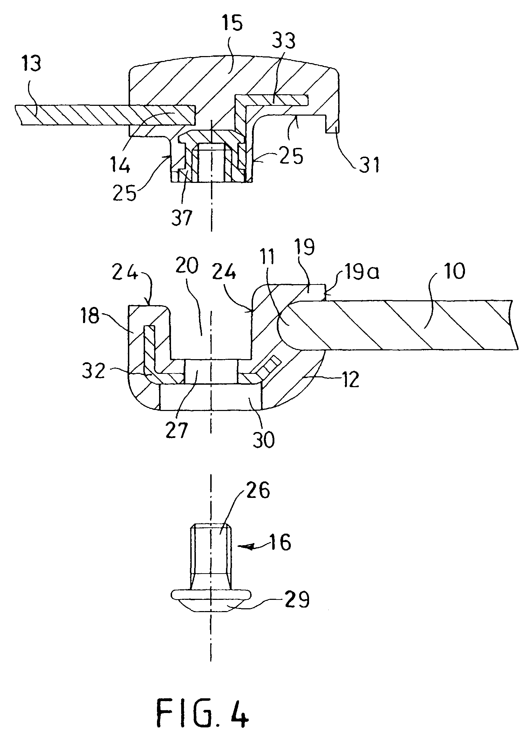

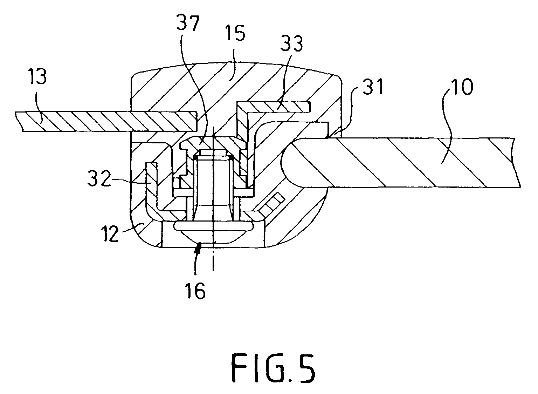

Die Ausführungsform nach den Fig. 4 und 5 unterscheidet sich von der ersten in den Fig. 2 und 3 dargestellten Ausführungsform im wesentlichen dadurch, dass hier als Verbindungsmittel keine selbstschneidenden, sondern normale Gewindeschrauben 16 verwendet werden. Um deren Gewindeschäfte 26 sicher im anderen Wulstelement 15 zu verankern, sind in dieses in den Abständen der Verschraubungen entsprechenden Abständen metallische Gewindebuchsen 37 eingelassen. Im Anordnungsbereich einer jeden solchen Gewindebuchse 37 ist hier die Bewehrungseinlage 33 ausgeklinkt.

Wie sich aus der nachfolgenden Beschreibung zweier weiterer Ausführungsbeispiele ergeben wird, sind die Wulstelemente 12 und 15 bei Betrachtung der Anordnung von der Verdeck- bzw. Fahrzeugaußenseite her nicht sichtbar, weil sie vom geprimten Scheibenrand 11 und/oder dem Rand 14 des Verdeckbezugs 13 abgedeckt sind.

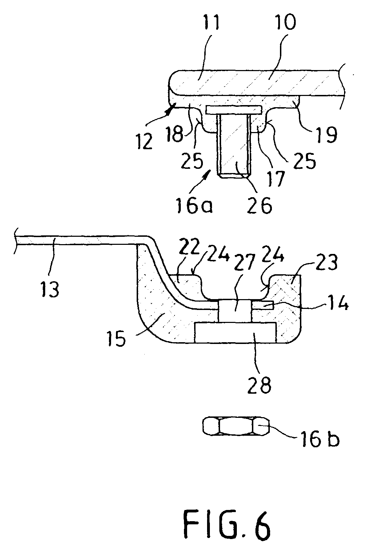

Fig. 6 zeigt anhand einer dritten Ausführungsform die wesentlichen Elemente des Verbindungsbereichs zwischen Scheibe 11 und äußerem Verdeckbezug 13 in seinen Einzelteilen. Deutlich ist zu sehen, wie das Wulstelement 12 an den äußeren umlaufenden Rand 11 der Scheibe 10 angebunden ist und wie das zweite Wulstelement 15 mit dem Ausschnittsrand 14 des äußeren Verdeckbezugs 13 verbunden ist.

Das Wulstelement 12 besitzt eine im Querschnitt etwa T-förmige Gestalt mit einem Zentralsteg 17 und zwei T-Schenkeln 18 und 19.

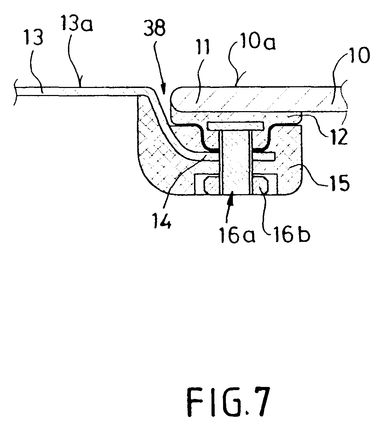

Daran angepaßt weist das dem äußeren Verdeckbezug 13 zugeordnete Wulstelement 15 im Querschnitt eine im wesentlichen U-Form auf mit zwei U-Schenkeln 22 und 23. Die aufeinander zu gerichteten Konturen der beiden Wulstelemente 12 und 15 weisen einen aneinander passenden, komplementären Verlauf auf, so dass die in ihrer Gesamtheit jeweils mit 24 und 25 bezeichneten Fügeflächen paßgenau ineinander finden, wenn die beiden Wulstelement 12 und 15 zusammengesetzt werden. Wie man weiter erkennen kann, sind die Fügeflächen aufgrund ihres jeweiligen Verlaufs auch dazu geeignet und bestimmt, eine Art Labyrinthdichtung auszubilden, sobald die beiden Wulstelemente 12 und 15 fest mit Verbindungsmitteln 16a, 16b zusammengehalten werden, wie dies Fig. 7 zeigt.

Bei dem in den Fig. 6 und 7 dargestellten Ausführungsbeispiel bestehen die Verbindungsmittel 16a, 16b jeweils aus einem in das scheibenseitige Wulstelement 12 eingegossenen sowie undrehbar darin gehaltenen Gewindebolzen 16a und einer dazu passenden Mutter 16b. Beim Zusammensetzen der Anordnung durchgreift der Gewindeschaft 26 des Gewindebolzens 16a jeweils eine Bohrung 27 in dem dem Verdeckbezugrand 14 zugeordneten inneren Wulstelement 15 bis in eine erweiterte Aufnahme 28 für die Mutter 16b. Wie Fig. 7 zeigt, ist die Mutter 16b im Endmontagezustand vollkommen versenkt aufgenommen, und es bleibt umfänglich noch Raum für den Ansatz eines Mutternschlüssels, mit dem die Verschraubung 16a, 16b gehandhabt werden kann.

Wie insbesondere Fig. 7 zeigt, ist der Verdeckbezugrand 14 hinter den Rand der Glasscheibe 10 und hinter dessen Wulstelement 12 eingezogen. Daraus resultiert eine optisch optimierte Ansicht insofern, als die Außenflächen 10a der Scheibe 10 und 13a des Verdeckbezugs 13 bündig in einer Ebene zu liegen kommen. Zwischen ihnen befindet sich lediglich noch ein schmaler Spalt nach Art einer Schattenfuge 38.

Der besonders vorteilhafte ästhetische Eindruck bei Betrachtung von der Verdeckaußenseite her wird also dadurch hervorgerufen, dass nur Verdeckstoff und Scheibe zu sehen sind. Dazu ist zu bemerken, dass der Rand 11 der Scheibe 10 auf der zum Wulstelement 12 weisenden Seite vor dem Anbringen des Wulstelements 12 mit einem undurchsichtigen Primer versehen wird, der im übrigen eine wirksame Barriere gegen UV-Strahlung darstellt.

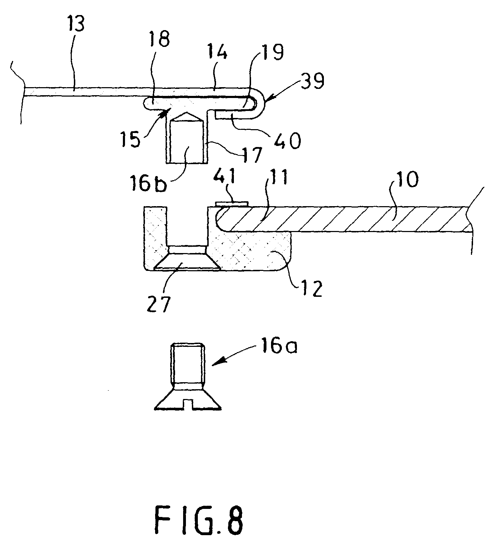

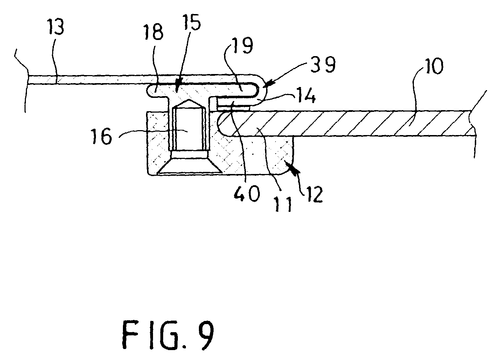

Auch bei der Ausführungsform nach den Fig. 8 und 9 sind ein scheibenseitiges Wulstelement 12 und ein verdeckstoffseitiges Wulstelement 15 vorhanden, die gleichfalls paßgenau zusammenfügbar sind. Die Querschnittsformen sind insoweit gegenüber der dritten Ausführung (Fig. 6 und 7) "vertauscht" als hier das Wulstelement 15 eine im wesentlichen T-Form und das andere, der geordnete Wulstelement 12 weitestgehend eine daran angepaßte U-Form besitzt.

Im Zentralsteg 17 des Wulstelements 15 sind Bohrungen 28 eingearbeitet für selbstschneidende Schrauben 16a, die entsprechende Durchgangsbohrungen 27 im Wulstelement 12 durchgreifen.

Eine Besonderheit der zweiten Ausführungsform besteht darin, dass der Verdeckbezugrand 14 einen Umbug 39 ausbildet, der um den äußeren sowie längeren Schenkel 19 der beiden T-Schenkel 18, 19 umgelegt ist. Der umgelegte Umbug-Abschnitt 40 gelangt zur Auflage auf dem Rand 11 der Scheibe 10.

Diese Auflage kann unmittelbar erfolgen oder unter Zwischenlage eines dünnen Dichtstranges 41, z.B. einer Raupe aus Dichtschaum, der auf den Scheibenrand geklebt wird bzw. an diesem anhaftet.

Auch diese Ausführungsform zeichnet sich durch eine optisch elegante Einpassung der Scheibe 10 in den Ausschnitt des Verdeckbezugs 13 aus. Auch hier sind von außen nur diese beiden teile sichtbar, wohingegen die Wulstelemente 12, 15 sowohl der Sicht als auch dem Einfluß schädlicher UV-Strahlung entzogen sind.

Die Wulstelemente sind bevorzugt aus einem PUR-Gießharz-System aufgebaut und weisen eine Härte in der Größenordnung von 40-60 Shore D auf, so dass sie also nicht gummiartig weich, sondern relativ hart und formbeständig sind.

## Patentansprüche

1. Klappverdeck für Kraftfahrzeuge wie Kabrioletts od.dgl., mit einem äußeren Verdeckbezug (13) und mindestens einer in einem Ausschnitt desselben angeordneten Scheibe, (10) die mit dem äußeren Verdeckstoff (13) mittels wenigstens eines Gießharz-Wulstelements (12) mechanisch fest und dicht verbunden ist, wobei der Rand (14) des Ausschnitts im äußeren Verdeckbezug (13) und der Rand (11) der Scheibe (10) von Wulstelementabschnitten eingefaßt sind, dadurch gekennzeichnet, dass der Ausschnittsrand (14) des äußeren Verdeckbezugs (13) einerseits und der Rand (11) der Scheibe (10) andererseits von jeweils einem eigenen, einen Rahmen bildenden Wulstelement (12; 15) eingefaßt sind, dass die beiden Wulstelemente (12, 15) mit Fügeflächen (24, 25) versehen sind, über die sie paßgenau miteinander kuppelbar sind, und dass die beiden Wulstelemente (12, 15) mittels lösbarer Verbindungsmittel (16) zusammengehalten sind.

2. Klappverdeck nach Anspruch 1, dadurch gekennzeichnet, dass die Verbindungsmittel (16), wie Schrauben, von der Innenseite des Verdecks her betätigbar sind, das innere Wulstelement (12) durchgreifen und im äußeren Wulstelement (15) verankerbar sind.

3. Klappverdeck nach Anspruch 2, dadurch gekennzeichnet, dass das innere Wulstelement (12) der Scheibe (10) und das äußere Wulstelement (15) dem äußeren Verdeckbezug (13) zugeordnet ist.

4. Klappverdeck nach Anspruch 2 oder 3, dadurch gekennzeichnet, dass in das äußere Wulstelement (15) Gewindebuchsen (37) zur Aufnahme von Gewindeschäften (26) der Verbindungsmittel (16) mit eingegossen sind.

5. Klappverdeck nach Anspruch 2 oder 3, dadurch gekennzeichnet, dass die Schrauben (16) selbstschneidend ausgebildet sind und mit ihren Gewindeschäften (26) jeweils in eine Aufnahmeöffnung (28) des äußeren Wulstelements (15) eingreifen.

6. Klappverdeck nach einem der vorhergehenden Ansprüche, dadurch gekennzeichnet, dass zumindest eines der Wulstelemente (12; 15) mit stabilisierenden Bewehrungselementen (32, 33) versehen ist.

7. Klappverdeck nach Anspruch 6, dass die Bewehrungselemente (32, 33) aus Metallstreifen bestehen, die in das betreffende Wulstelement (12, 15) mit eingegossen sind.

8. Klappverdeck nach Anspruch 6 oder 7, dadurch gekennzeichnet, dass die Bewehrungselemente (32, 33) zumindest teilweise einer ggf. winkligen Querschnittskontur des betreffenden Wulstelements (12; 15) folgen und insoweit einen Versteifungskern ausbilden.

9. Klappverdeck nach einem der Ansprüche 5 bis 8, dadurch gekennzeichnet, dass die Bewehrungselemente (32, 33) Öffnungen aufweisen, mit denen die Schraub-Verbindungsmittel (16) gewindemäßig zusammenwirken.

10. Klappverdeck nach einem der vorhergehenden Ansprüche, dadurch gekennzeichnet, dass eines der Wulstelemente (12) ein im Querschnitt im wesentlichen U-förmiges Rinnenprofil ausbildet und das andere Wulstelement (15) einen im wesentlichen T-förmigen Querschnitt aufweist mit einem leistenförmigen Vorsprung (21), so dass die beiden Wulstelemente (12, 15) nach Art einer Nut-Feder-Verbindung ineinandergreifen.

11. Klappverdeck nach Anspruch 10, dadurch gekennzeichnet, dass das den leistenförmigen Vorsprung (21) aufweisende Wulstelement (15) mit Schultern (22, 23) versehen ist, die zur Anlage an Gegenflächen des anderen Wulstelements (15) dienen, welche die Stirnflächen der U-Schenkel (18, 19) ausbilden.

12. Klappverdeck nach einem der vorhergehenden Ansprüche, dadurch gekennzeichnet, dass das dem äußeren Verdeckbezug (13) zugeordnete Wulstelement (15) eine Randleiste (31) aufweist, die auf der Scheibenaußenseite den die Scheibe (10) einfassenden Rand des anderen Wulstelements (12) übergreift.

13. Klappverdeck nach einem der vorherigen Ansprüche, dadurch gekennzeichnet, dass die Wulstelemente (12, 15) mit ihren Fügeflächen (24, 25) unter Bildung einer Art Labyrinthdichtung luft- und feuchtigkeitsdicht aneinanderliegen.

14. Klappverdeck nach einem der vorhergehenden Ansprüche, dadurch gekennzeichnet, dass die Aufnahmen (28) für die Verbindungsmittel (16) im äußeren Wulstelement (15) als auf dessen Außenseite von Gießharz überdeckte Sackbohrungen ausgeführt sind.

15. Klappverdeck nach einem der vorhergehenden Ansprüche, dadurch gekennzeichnet, dass im inneren Wulstelement (12) auf dessen Innenseite Einsenkungen (30) zur versenkten Aufnahme der Verbindungsmittel-Köpfe (29) ausgebildet sind.

16. Klappverdeck nach Anspruch 1, dadurch gekennzeichnet, dass die Wulstelemente (12, 15) auf den zum Fahrzeuginnern weisenden Seiten des äußeren Verdeckbezugs (13) bzw. der Scheibe (10) derart angeordnet sind, dass sie von Randpartien des äußeren Verdeckbezugs (13) und/oder der Scheibe (10) abgedeckt sind.

17. Klappverdeck nach Anspruch 16, dadurch gekennzeichnet, dass sich der Ausschnittsrand (14) des Verdeckbezugs (13) und der Rand (11) der Scheibe (10) überlappen.

18. Klappverdeck nach Anspruch 16 oder 17, dadurch gekennzeichnet, dass der Ausschnittsrand (14) des Verdeckbezugs (13) hinter den Rand (11) der Scheibe (10) eingezogen ist.

19. Klappverdeck nach Anspruch 18, dadurch gekennzeichnet, dass der Ausschnittsrand (14) des Verdeckbezugs (13) in einem Wulstelement (15) angeordnet ist, das zumindest einen sich hinter dem Scheibenrand (11) und hinter einem an diesem angebrachten Wulstelement (12) erstreckenden Abschnitt aufweist.

20. Klappverdeck nach Anspruch 19, dadurch gekennzeichnet, dass die Außenflächen von Verdeckbezug (13) und Scheibe (10) im wesentlichen in gleicher Ebene, also bündig, angeordnet sind und im sichtbaren Grenzbereich lediglich eine Art Schattenfuge (38) ausbilden.

21. Klappverdeck nach einem der Ansprüche 16 bis 20, dadurch gekennzeichnet, dass sich das scheibenseitige Wulstelement (15) im wesentlichen nur auf einer Seite der Scheibe (10) längs deren umlaufenden Randes (11) erstreckt.

22. Klappverdeck nach Anspruch 16 oder einem darauf folgenden, dadurch gekennzeichnet, dass der Ausschnittsrand (14) des Verdeckbezugs (13) einen von einem Abschnitt des Wulstelements (15) ausgefüllten Umbug (39) ausbildet, dessen innerer Umbugabschnitt (40) zur mindestens mittelbaren Anlage auf dem Scheibenrand (11) bestimmt ist.

23. Klappverdeck nach Anspruch 22, dadurch gekennzeichnet, dass der innere Umbugabschnitt (40) unter Zwischenlage eines Dichtstreifens (41) auf der Scheibenrandfläche (11) aufliegt.

24. Klappverdeck nach einem der Ansprüche 16 bis 23, dadurch gekennzeichnet, dass im scheibenseitigen Wulstelement (12) Schraubenbolzen (16a) undrehbar eingegossen sind, die jeweils das verdeckbezugseitige Wulstelement (15) durchgreifen und dort in eine erweiterte Ausnehmung (28) eintauchen, in der eine Mutter (16b) versenkt Platz findet sowie der Werkzeugansatz eines Steckschlüssels paßt.

25. Klappverdeck nach einem der Ansprüche 16 bis 24, dadurch gekennzeichnet, dass das verdeckbezugseitige Wulstelement (15) mit Aufnahmen (28) für selbstschneidende Schrauben (16a) bzw. Gewindebohrungen für Schraubbolzen ausgerüstet ist, die das scheibenseitige Wulstelement (12) vom Fahrzeuginnern her durchgreifen.
